# EUROPEAN PATENT APPLICATION

(11) **EP 4 391 309 A1**
(43) Date of publication of application: **26.06.2024**
(21) Application number: 23200007.5
(22) Date of filing: 27.09.2023
(51) Int. Cl.: H02K 1/14, H02K 15/02

(54) **MOTOR STATOR, METHOD OF MANUFACTURING MOTOR STATOR AND MOTOR**

(30) Priority: 23.12.2022 CN 202211661396
(71) Applicant: Otis Elevator Company, Farmington, Connecticut 06032 (US)
(72) Inventor: ZHU, Fengkun, Tianjin 300457 (CN); WU, Hongliang, Tianjin 300457 (CN); XI, Xin, Tianjin 300457 (CN); HUBBARD, James Leo, Farmington 06032 (US)
(74) Representative: Dehns

(57) **Abstract**

The present application provides a motor stator, a method of manufacturing a motor stator and a motor. The motor stator comprises: a yoke comprising a yoke inner circumferential wall surrounding a core hole; a teeth member arranged in the core hole of the yoke and comprising a plurality of teeth distributed circumferentially, wherein each of the plurality of teeth comprises an outer end, an inner end and a middle part between the outer and inner ends, and coils are wound on the middle parts of the plurality of teeth; wherein, the outer ends of at least a part of the plurality of teeth comprise first slots, the yoke inner circumferential wall of the yoke has a plurality of second slots corresponding to positions of the first slots of the plurality of teeth, and a plurality of connecting pieces pass through the corresponding first and second slots, thereby connecting the teeth member to the yoke. The device and method according to the embodiments of the present invention make it convenient for motor stator winding.

## Description

### FIELD OF THE INVENTION

The present invention relates to the field of motors, and in particular to a motor stator, a method of manufacturing a motor stator, and a motor having such motor stator.

### BACKGROUND OF THE INVENTION

A motor stator usually consists of a stator yoke and teeth extending inward from the stator yoke. The small clearances between the inner ends of the teeth will cause difficulty in winding. Sometimes, distributed winding is used, which, however, leads to longer winding bends and thus more copper wires. To solve this problem, some existed motor stators use separable yokes and teeth, where the teeth are connected to the yoke after winding is completed. It is desired that the separable teeth and yoke are to be formed by laminating sheets which are stamped from the same raw material sheet. However, due to the ductility of the material during stamping, the outer diameter of the blank punched out will be larger than the inner diameter of the punched hole, which makes the outer diameter of the laminated teeth larger than the inner diameter of the core hole of the laminated yoke, thus making assembly difficult. However, stamping the teeth and yoke separately will greatly increase the cost of raw materials, while stamping the teeth and yoke with clearance is technically difficult and complicated. On the other hand, the teeth are prone to deform in use due to its poor rigidity and insufficient support.

### SUMMARY OF THE INVENTION

The object of the present application is to solve or at least alleviate the problems existing in the prior art.

According to one aspect, a motor stator is provided, which comprises:
a yoke comprising a yoke inner circumferential wall surrounding a core hole;
a teeth member arranged in the core hole of the yoke and comprising a plurality of teeth distributed circumferentially, wherein each of the plurality of teeth comprises an outer end, an inner end and a middle part between the outer and inner ends, and coils are wound on the middle parts of the plurality of teeth;
wherein, the outer ends of at least a part of the plurality of teeth comprise first slots, the yoke inner circumferential wall of the yoke has a plurality of second slots corresponding to positions of the first slots of the plurality of teeth, and a plurality of connecting pieces pass through the corresponding first and second slots, thereby connecting the teeth member to the yoke.

Optionally, in an embodiment of the motor stator, the first and second slots extend axially, and the plurality of connecting pieces are pins having a cross-sectional shape matching the first and second slots.

Optionally, in an embodiment of the motor stator, shapes of the first slot, the second slot, and the connecting piece are configured such that the outer ends of the teeth and the yoke inner circumferential wall of the yoke are interlocked radially and circumferentially.

Optionally, in an embodiment of the motor stator, in the cross section, the first and second slots have a narrowed opening, and the connecting piece has a narrowed waist.

Optionally, in an embodiment of the motor stator, in the cross section, the connecting piece is dumbbell-shaped, I-shaped or hourglass-shaped.

Optionally, in an embodiment of the motor stator, the plurality of teeth are in contact with the yoke inner circumferential wall only with the outer end faces, the outer end faces of the plurality of teeth are convex, and the yoke inner circumferential wall of the yoke has a plurality of concave faces corresponding to the position and shape of the outer end faces of the plurality of teeth.

Optionally, in an embodiment of the motor stator, the outer end faces of the plurality of teeth are convex arcs with a corresponding central angle greater than 90 degrees.

Optionally, in an embodiment of the motor stator, in the plurality of teeth, the clearance between the outer ends of adjacent teeth is greater than the clearance between the inner ends of adjacent teeth, and optionally, the inner end, middle part and outer end of each tooth have the same width.

Optionally, in an embodiment of the motor stator, the inner ends of the plurality of teeth are connected to form a teeth member inner circumferential wall, and optionally, the inner ends of the plurality of teeth are connected through bridges in arc shape.

Optionally, in an embodiment of the motor stator, all teeth in the plurality of teeth have the first slot, and the motor stator is wound by concentrated winding.

Optionally, in an embodiment of the motor stator, the yoke is formed by lamination of a first piece, and the teeth member is formed by lamination of a second piece, wherein the first piece and the second piece are stamped from the same raw material sheet, and the second piece is located on the inner side of the first piece on the raw material sheet.

Optionally, in an embodiment of the motor stator, the teeth member is assembled to the core hole of the yoke when the yoke is heated to expand.

A motor, especially a motor for an elevator or escalator, is further provided, which comprises:
the motor stator according to the various embodiments of the present application; and
a rotor arranged on an inner side of the teeth member inner circumferential wall of the motor stator.

A method of manufacturing a motor stator is further provided, which comprises:
stamping, from the same raw material sheet, a first piece for forming a yoke of the motor stator and a second piece for forming a teeth member of the motor stator, wherein the second piece is located on the inner side of the first piece on the raw material sheet;
laminating the first piece to form the yoke;
laminating the second piece to form the teeth member, and installing coils onto each tooth of the teeth member;
assembling the teeth member to a core hole of the yoke; and
assembling a plurality of connecting pieces to corresponding first slots of a plurality of teeth of the teeth member and second slots on a yoke inner circumferential wall of the yoke, thereby connecting the teeth member to the yoke.

Optionally, the steps of assembling the teeth member to the core hole of the yoke comprises: heating the yoke to increase the diameter of the core hole.

The device and method according to the embodiments of the present invention makes it convenient for motor stator winding.

### BRIEF DESCRIPTION OF THE DRAWINGS

With reference to the accompanying drawings, the disclosure of the present application will become easier to understand. Those skilled in the art would readily appreciate that these drawings are for the purpose of illustration, and are not intended to limit the protection scope of the present application. In addition, in the figures, similar numerals are used to denote similar components, where:
FIG. 1 is a top view of a yoke of a motor stator according to an embodiment;
FIG. 2 is a top view of a teeth member of a motor stator according to an embodiment;
FIG. 3 is an enlarged view of area A in FIG. 2;
FIG. 4 is a three-dimensional view of a coil and a connecting piece of a motor stator according to an embodiment;
FIG. 5 is a top view of a preliminary assembly of a motor stator according to an embodiment;
FIG. 6 is an enlarged view of area B in FIG. 5; and
FIG. 7 is a cross-sectional view of alternative connecting pieces.

### DETAILED DESCRIPTION OF EMBODIMENT(S) OF THE INVENTION

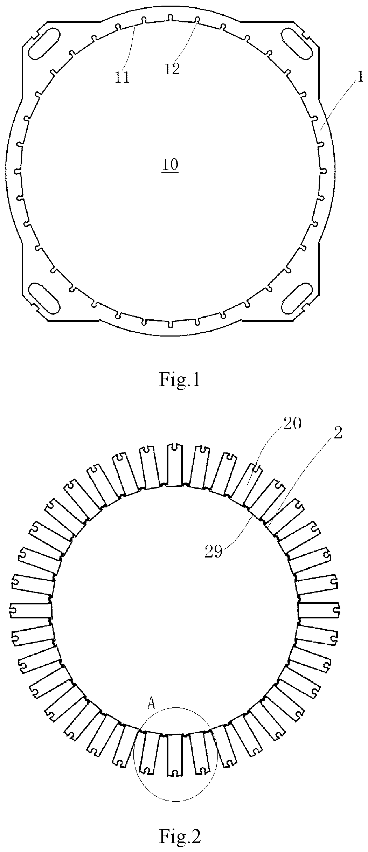

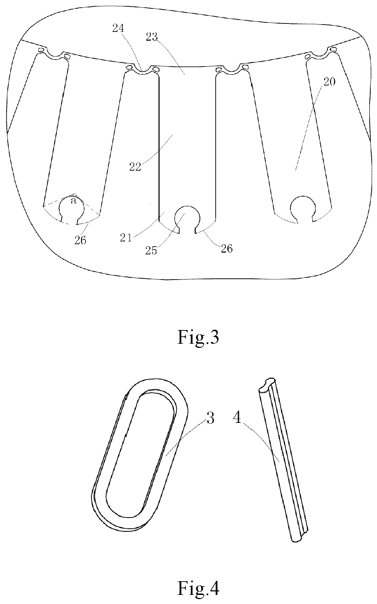

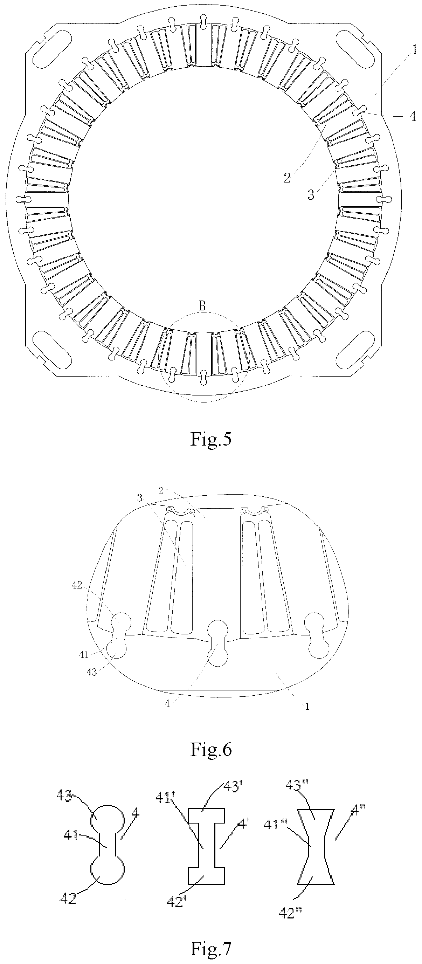

Referring to FIGS. 1 to 7, a motor stator according to an embodiment of the present invention is introduced, which can be used, for example, in elevator devices, escalator devices, automatic conveyor belts, etc., such as elevator tractor motors, escalator step chain drive motors, and the like. Terms such as "axial", "radial" and "circumferential" mentioned herein are defined based on the rotation direction of the motor rotor. For example, "axial" refers to the direction of the axis along which the motor rotor rotates. The motor stator according to the embodiment of the present invention may comprise a yoke 1 shown in FIG. 1 and a teeth member 2 shown in FIG. 2. The yoke 1 comprises a yoke inner circumferential wall 11 surrounding a core hole 10. When assembled, the teeth member 2 is arranged in the core hole 10 of the yoke 1 and comprises a plurality of teeth 20 distributed along the circumference. As shown in FIG. 3, the plurality of teeth 20 each comprises an outer end 21, an inner end 23, and a middle part 22 between the outer end 21 and the inner end 23, wherein the middle parts 22 of the plurality of teeth are used for coils 3 winding. The outer ends 21 of at least a part of the plurality of teeth 20 comprise first slots 25, and the yoke inner circumferential wall 11 of the yoke 1 has a plurality of second slots 12 corresponding to the positions of the first slots 25 of the plurality of teeth. As shown in FIGS. 5 and 6, a plurality of connecting pieces 4 pass through the corresponding first slots 25 and second slots 12, thereby connecting the teeth member 2 to yoke 1. It should be appreciated that, although in the illustrated embodiment, the outer end of each tooth 20 is provided with a first slot 25, and the plurality of connecting pieces 4 connect each tooth to the yoke 1, in alternative embodiments, however, a first slot 25 may only be provided at the outer ends 20 of a part of the teeth 20. For example, one tooth in every two adjacent teeth has a first slot 25, or two teeth in every three adjacent teeth each have a first slot 25, or three teeth in every four adjacent teeth each have a first slot 25, and the like. In some embodiments, no matter how many teeth are provided, at least, for example, 12 connecting pieces are to be provided between the yoke 1 and the teeth member 2 (i.e., the central angle between adjacent teeth is less than 30 degrees), or at least 18 connecting pieces (the central angle between adjacent teeth is less than 20 degrees), or at least 24 connecting pieces (the central angle between adjacent teeth is less than 15 degrees).

As explicitly shown in FIG. 3, since the plurality of teeth 20 extend radially, coils 3 can be installed from the outer ends of the teeth 20 with larger clearance due to the separable structure of the tooth member 2, thereby making it more convenient and efficient to assemble coils 3. In addition, the teeth of the teeth member are connected to the yoke through connecting pieces to ensure a good connection between the teeth of the teeth member and the yoke, so that the teeth member can be well secured at the teeth and prevented from deformation.

As shown in FIG. 4, in some embodiments, coils 3 may be prefabricated coils that can be directly sleeved on the teeth of the teeth member, or alternatively, coils 3 may also be directly wound around the teeth. In some embodiments, motor stator is wound by concentrated winding, i.e., a single coil is arranged on a single tooth 20. The larger clearance between the open outer ends of the teeth 20 makes the concentrated winding easier to operate. Compared to distributed winding of winding across two teeth, concentrated winding allows fewer coils at the bends at both ends of the tooth, thus saving the amount of copper wires used.

In some embodiments, the first slots 25 and the second slots 12 extend axially. And, as shown in FIG. 4, a plurality of connecting pieces 4 are pins with a cross-sectional shape matching the first slots 25 and second slots 12. Specifically, in the embodiments shown, as shown in FIGS. 6 and 7, the first slots 25 and the second slots 12 each comprise a circular body and a narrowed opening in cross section, where the openings of the first slot 25 and the second slot 12 are aligned. Accordingly, the connecting piece 4 is dumbbell-shaped in the cross section. In an alternative embodiment, when connecting piece 4' is substantial I-shaped in cross section, the first slot 25 and the second slot 12 are substantial T-shaped in cross section. In an alternative embodiment, when connecting piece 4" is substantial hourglass-shaped in cross section, the first slot 25 and the second slot 12 are substantial inverted trapezoidal in cross section.

In some embodiments, the shapes of the first slots 25, the second slots 12 and the connecting pieces 4 are configured such that the outer ends 21 of the teeth interlock radially and circumferentially with the yoke inner circumferential wall 11 of the yoke. That is, without considering the connection of one tooth 20 with other teeth, i.e., only considering a single tooth 20, the connecting piece 4 can lock the radial and circumferential movement of the tooth 20 with respect to the yoke 1. Based on the above concept, those skilled in the art can design connecting pieces, first slots and second slots of various suitable geometrical shapes. In some embodiments, in terms of cross section, first slots 25 and second slots 12 each have a narrowed opening, while connecting pieces 4 each have a narrowed waist 41. In other words, at least one position of the inner body of the first slot 25 and second slot 12 is larger than the size of its opening, which size is measured circumferentially. Accordingly, the connecting piece 4 has two ends 42, 43 and a waist 41, where at least one position of the two ends 42, 43 of the connecting piece 4 is larger than the size of its waist 41. As shown in FIG. 7, in some embodiments, connecting piece 4 is dumbbell-shaped, connecting piece 4' is I-shaped, and connecting piece 4" is hourglass-shaped. It can also be conceived that the first and second slots have different shapes, or the connecting pieces do not match the slots perfectly in cross section. Due to the teeth member 2 not having good structural strength, radial limitation is provided so that the yoke supports the teeth member 2 from a plurality of teeth, so as to ensure that the teeth member will not deform during the long-term use of the motor and to prevent the rotor arranged inside the teeth member 2 from contacting the teeth member 20 thereby causing "stator scrapping rotor".

In some embodiments, the inner ends 23 of the plurality of teeth 20 are connected to form a teeth member inner circumferential wall 29. For example, the inner ends 23 of the plurality of teeth 20 may be connected through bridges 24. In some embodiments, the bridge 24 is formed as an outer convex arc, thereby improving the connection strength and magnetic flux of the inner ends 23 of the teeth member. The inner side of the teeth member inner circumferential wall 29 is used to arrange the rotor, while the stable shape of the teeth member 2 can ensure that the rotor will not contact the teeth member 2 when it rotates. In some embodiments, the respective middle parts 22 of the plurality of teeth extend radially with constant width, with the inner ends 23, outer ends 21 and middle parts 22 of the respective teeth having the same width. In some embodiments, in the plurality of teeth, the clearance between the outer ends 21 of adjacent teeth is greater than the clearance between the inner ends 23 of adjacent teeth, which improves the assembly efficiency of coils 3.

As can be seen in FIGS. 3 and 6, the outer end faces 26 of the plurality of teeth are convex in the cross section, and the yoke inner circumferential wall 11 of the yoke has a plurality of concave faces corresponding to the position and shape of the plurality of teeth, while the plurality of teeth engage with the yoke 1 only through their outer end faces 26. A contact engagement between the convex faces 26 of the teeth and the concave faces of the yoke inner circumferential wall 11 enables pre-positioning of the teeth member in the circumferential direction during assembly, so as to facilitate the alignment of the first and second slots and installation of the connecting pieces 4. In addition, the engagement also allows the teeth member to be coupled with the yoke in the circumferential direction. In some embodiments, the outer end faces 26 of the plurality of teeth are convex arc faces, while the convex arc face has a corresponding central angle a (FIG. 3) greater than 90 degrees, e.g., in the range from 90 degrees to 180 degrees, such as from 120 degrees to 150 degrees. By providing a gentle convex-arc connection, assembly of the teeth member to the yoke detailed below can be facilitated.

Generally speaking, the yoke, teeth member and rotor are all formed by lamination of pieces, such as silicon steel sheets. In actual production, in order to improve material utilization and simplify production process, as a matter of fact, the first piece laminated to form the yoke and the second piece laminated to form the tooth member are stamped from the same raw material sheet. The second piece is located at the inner side of the first piece, i.e., the material corresponding to the core hole position in the middle of the first piece is just stamped to become the material to form the tooth member. Similarly, the material inside the teeth member is laminated to form the rotor. However, due to the ductility of the material during stamping, the outer diameter of the teeth member formed by lamination of the second piece will be slightly larger than the inner diameter of the core hole of the yoke formed by lamination of the first piece, e.g., about 0.6 mm larger. In this case, it is not possible to assemble the teeth member directly to the core hole of the yoke. The present application, however, increases the diameter of the core hole by heating the yoke, e.g., increased by 1 mm, so that the teeth member can be easily assembled to the core hole. As mentioned above, by engaging the gentle convex arc face corresponding to a central angle of more than 90 degrees with the matching concave arc face, the yoke inner circumferential wall will not expand during a temperature cycle and thus avoids an interference with the teeth member which results in assembly difficulties, and larger dimensional tolerances are allowed.

A motor, especially a motor for an elevator or escalator, is further provided, the motor comprising: a motor stator according to the various embodiments; and a rotor arranged on a teeth member inner circumferential wall of the motor stator.

In addition, as detailed above, a method of manufacturing a motor stator is further provided, which comprises: stamping, from a same raw material sheet, a first piece for forming a yoke of the motor stator and a second piece for forming a teeth member of the motor stator, wherein the second piece is located on the inner side of the first piece on the raw material sheet; laminating the first piece to form the yoke; laminating the second piece to form the teeth member, and installing coils onto respective teeth of the teeth member; assembling the teeth member to a core hole of the yoke; and assembling a plurality of connecting pieces to corresponding first slots of a plurality of teeth of the teeth member and second slots on a yoke inner circumferential wall of the yoke, thereby connecting the teeth member to the yoke. In some embodiments, the steps of assembling the teeth member to the core hole of the yoke comprises: heating the yoke to increase the diameter of the core hole, and assembling the connecting pieces after cooling the yoke.

The specific embodiments of the present application described above are merely intended to describe the principles of the present application more clearly, wherein various components are clearly shown or described to facilitate the understanding of the principles of the present invention. Those skilled in the art may, without departing from the scope of the present application, make various modifications or changes to the present application. Therefore, it should be understood that these modifications or changes should be included within the scope of patent protection of the present application.

## Claims

1. A motor stator, comprising:
a yoke comprising a yoke inner circumferential wall surrounding a core hole;
a teeth member arranged in the core hole of the yoke and comprising a plurality of teeth distributed circumferentially, wherein each of the plurality of teeth comprises an outer end, an inner end and a middle part between the outer and inner ends, and coils are wound on the middle parts of the plurality of teeth;
wherein, the outer ends of at least a part of the plurality of teeth comprise first slots, the yoke inner circumferential wall of the yoke has a plurality of second slots corresponding to positions of the first slots of the plurality of teeth, and a plurality of connecting pieces pass through the corresponding first and second slots, thereby connecting the teeth member to the yoke.

2. The motor stator according to claim 1, wherein the first and second slots extend axially, and the plurality of connecting pieces are pins having a cross-sectional shape matching the first and second slots.

3. The motor stator according to any of claims 1 to 2, wherein shapes of the first slot, the second slot, and the connecting piece are configured such that the outer ends of the teeth and the yoke inner circumferential wall of the yoke are interlocked radially and circumferentially.

4. The motor stator according to claim 3, wherein in the cross section, the first and second slots each have a narrowed opening, and the connecting piece has a narrowed waist.

5. The motor stator according to any preceding claim, wherein in the cross section, the connecting piece is dumbbell-shaped, I-shaped or hourglass-shaped.

6. The motor stator according to any preceding claim, wherein the plurality of teeth are in contact with the yoke inner circumferential wall only by outer end faces, the outer end faces of the plurality of teeth are convex, and the yoke inner circumferential wall of the yoke has a plurality of concave faces corresponding to the position and shape of the outer end faces of the plurality of teeth.

7. The motor stator according to claim 6, wherein the outer end faces of the plurality of teeth are convex arc faces with a corresponding central angle greater than 90 degrees.

8. The motor stator according to any preceding claim, wherein in the plurality of teeth, a clearance between the outer ends of adjacent teeth is greater than a clearance between the inner ends of adjacent teeth, and optionally, the inner end, middle part and outer end of each tooth have the same width.

9. The motor stator according to any preceding claim, wherein the inner ends of the plurality of teeth are connected to form a teeth member inner circumferential wall, and optionally, the inner ends of the plurality of teeth are connected through arc shaped bridges.

10. The motor stator according to any preceding claim, wherein all teeth in the plurality of teeth have the first slot, and the motor stator is wound by concentrated winding.

11. The motor stator according to any preceding claim, wherein the yoke is formed by lamination of a first piece, and the teeth member is formed by lamination of a second piece, wherein the first and second pieces are stamped from a same raw material sheet, and the second piece is located on an inner side of the first piece on the raw material sheet.

12. The motor stator according to claim 11, wherein the teeth member is assembled to the core hole of the yoke after the yoke is heated to expand.

13. A motor, comprising:
the motor stator according to any of claims 1 to 12; and
a rotor arranged on an inner side of the teeth member inner circumferential wall of the motor stator.

14. A method of manufacturing a motor stator, comprising:
stamping, from a same raw material sheet, a first piece for forming a yoke of the motor stator and a second piece for forming a teeth member of the motor stator, wherein the second piece is located on an inner side of the first piece on the raw material sheet;
laminating the first piece to form the yoke;
laminating the second piece to form the teeth member, and installing coils onto each tooth of the teeth member;
assembling the teeth member to a core hole of the yoke; and
assembling a plurality of connecting pieces to corresponding first slots of a plurality of teeth of the teeth member and second slots on a yoke inner circumferential wall of the yoke, thereby connecting the teeth member to the yoke.

15. The method of manufacturing a motor stator according to claim 14, wherein steps of assembling the teeth member to the core hole of the yoke comprises: heating the yoke to increase diameter of the core hole.
